Europäisches Patentamt

European Patent Office

Office européen des brevets

(11) Publication number: **0 117 589**
**A1**

## (12) EUROPEAN PATENT APPLICATION

(21) Application number: **84200232.1**

(22) Date of filing: **21.02.84**

(51) Int. Cl.³: **A 23 N 12/02**

(30) Priority: **22.02.83 NL 8300652**

(43) Date of publication of application: **05.09.84**
**Bulletin 84/36**

(84) Designated Contracting States: **DE FR GB IT NL SE**

(71) Applicant: **Machinefabriek Duurland B.V.,
Staringstraat 19, NL-2152 CW Nieuw Vennep (NL)**

(72) Inventor: **Duursema, Pieter Johannes Egbert,
Bilderdijkstraat 13, NL-7471 XZ Goor (NL)**

(74) Representative: **Jacobson, Gerard et al, Octrooibureau
Los en Stigter B.V. Postbus 20052, NL-1000 HB
Amsterdam (NL)**

(54) **Apparatus for washing vegetables.**

(57) The invention relates to an apparatus for washing vegetables, in particular for washing cut vegetables such as endive, witloof, or leek, as well as for washing finer vegetables, such as spinach, comprising a water container (1), to which the vegetables to be washed are supplied at one end, while at the opposite end of the water container (1) a discharge means (4) is provided for discharging the washed vegetables.

According to the invention at least one nozzle pipe (15) extends in the water container (1) underneath the water level, which nozzle pipe (15) is connected to a supply of a water-air mixture obtained by means of an ejector (24) having an air-inlet pipe (23), said water-air mixture giving the supplied vegetables a component of movement in the water container (1) in the direction of the discharge means (4).

ACTORUM AG

Apparatus for washing vegetables.

The invention relates to an apparatus for washing vegetables, in particular for washing cut vegetables such as endive, witloof, or leek, as well as for washing finer vegetables, such as spinach, comprising a water container, to which the vegetables to be washed are supplied at one end, while at the opposite end of the water container a discharge means is provided for discharging the washed vegetables.

In a known embodiment of an apparatus of this type for washing vegetables a plurality of rollers provided with blades and adapted to be driven are mounted in the water container. A sieve bottom extends underneath these rollers, whilst collecting funnels for the dirt are positioned below this sieve bottom. The vegetables to be washed are transported over the sieve bottom towards the discharge means by the blades of the rollers, while the dirt which adheres to the vegetables to be washed falls downwardly into the funnels and is discharged periodically.

This known apparatus for washing vegetables has the disadvantage that the transport of the vegetables through the water container is obtained with mechanical means, which increases the cost price of the apparatus, while the more or less beating action exerted by the blades of the rollers on the vegetables may unfavourably influence the quality of the vegetables.

It is an object of the present invention to provide an apparatus for washing vegetables wherein this disadvantage is removed in an effective manner.

For this purpose the apparatus for washing vegetables according to the invention is characterized in that at least one nozzle pipe extends in the water container underneath the water level, which nozzle pipe is connected to a supply of a water-air mixture obtained by means of an ejector having an air-inlet pipe, said water-air mixture giving the supplied vegetables a component of movement in the water container in the direction of the discharge means.

According to the invention the vegetables are transported through the water container exclusively by the water flow. The supply of air in the water container aims at obtaining a turbulence of the water, which favourably influences the washing action, whilst adhering air-bubbles result in that the particles of the vegetables will float upwardly more rapidly. Therefore the washing process will practically wholly take place in the upper portion of the water container, whilst the heavier dirt will sink downwardly towards the lower portion of the water container.

According to a favourable embodiment of the apparatus for washing vegetables a first nozzle pipe operates in the vicinity of the vegetable supply end of the water container, while a second nozzle pipe operates between the first nozzle pipe and the discharge means, both nozzle pipes extending in the transverse direction of the water container over at least approximately the entire width thereof.

Further it is proposed according to the invention that the said nozzle pipe(s) is (are) connected to a recirculation pump, which may suck water through a suction filter near the vegetable discharge end of the water container, the delivery side of this pump being connected to the (each) nozzle pipe through a delivery pipe, in which the ejector is mounted, while at least one further nozzle pipe which is connected to a supply of fresh water, lies closer to the vegetable discharge end than the first mentioned nozzle pipe(s).

The invention will hereafter be elucidated with reference to the drawings which show an embodiment of an apparatus for washing vegetables according to the invention.

Fig. 1 is a schematical section of an embodiment of the apparatus according to the invention for washing vegetables.

Fig. 2 is a top view of the apparatus according to fig. 1 for washing vegetables, wherein several parts are omitted.

The apparatus for washing vegetables shown in the drawings serves for continuously washing cut vegetables such as endive, loose kinds of cabbage, witloof or leek, as well as for continuously washing finer vegetables such as spinach.

This washing apparatus which has a large capacity of e.g. 1000 - 5000 kg/h, comprises a water container 1 of rustless steel, wherein the washing process takes place and wherein the vegetables to be washed are supplied at the end 2. A discharge means 4 for the discharge of the washed vegetables from the water container 1 is provided at the opposite end 3 of the water container 1.

The discharge means 4 comprises a perforated endless discharge conveyor belt 5, which extends over the whole width of the water container 1. The one end of the discharge conveyor belt 5 is positioned underneath, and the other end is positioned above the water level of the water container 1. The end of the discharge conveyor belt 5 which is positioned above the water level debouches in an outlet case 6 for washed vegetables.

The discharge conveyor belt 5 is passed over two rollers 7, 8, which are supported by a frame 9. The roller 7 functions as a stretching roller for the discharge conveyor belt 5 and may be displaced by means of an adjusting member 10 connected to the frame 9. The roller 8 is connected to a sprocket 11. This sprocket 11 is driven by means of a chain 12, which is driven itself by an electric motor 13 through a reduction drive gear mechanism.

A cleaning brush 14 acts on the lower part of the discharge conveyor belt 5.

A first horizontal nozzle pipe 15 operates in the water container 1 in the vicinity of the vegetable supply end 2, whilst a second horizontal nozzle pipe 16 operates between the first nozzle pipe 15 and the discharge means 4. Both nozzle pipes 15, 16 extend in the transverse direction of the water container 1 over substantially the whole width of the water container 1. A water-air mixture is supplied to the two nozzle pipes 15, 16 and gives a component of movement in the water container 1 to the vegetables to be washed in the direction of the discharge means 4.

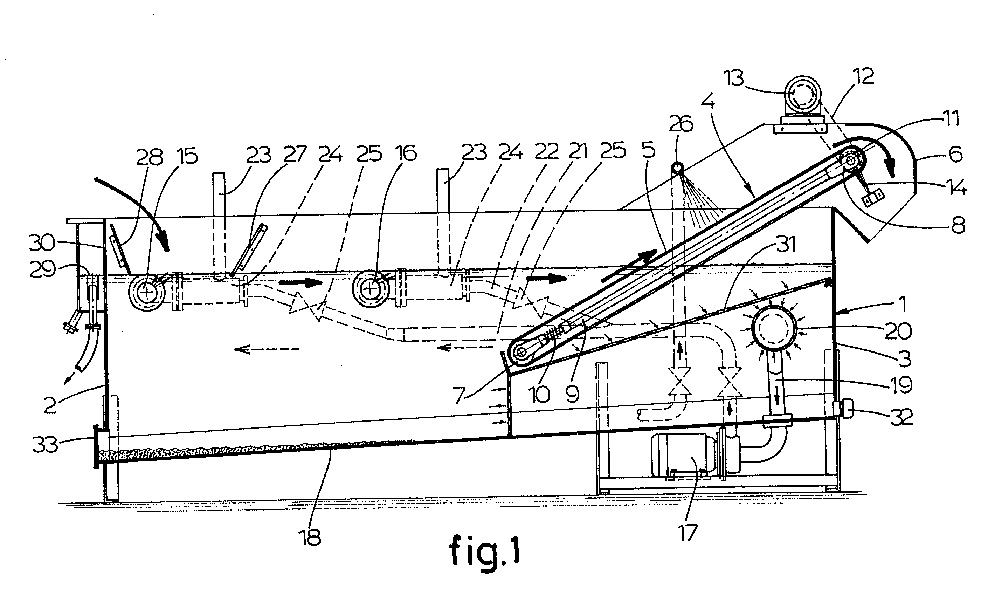

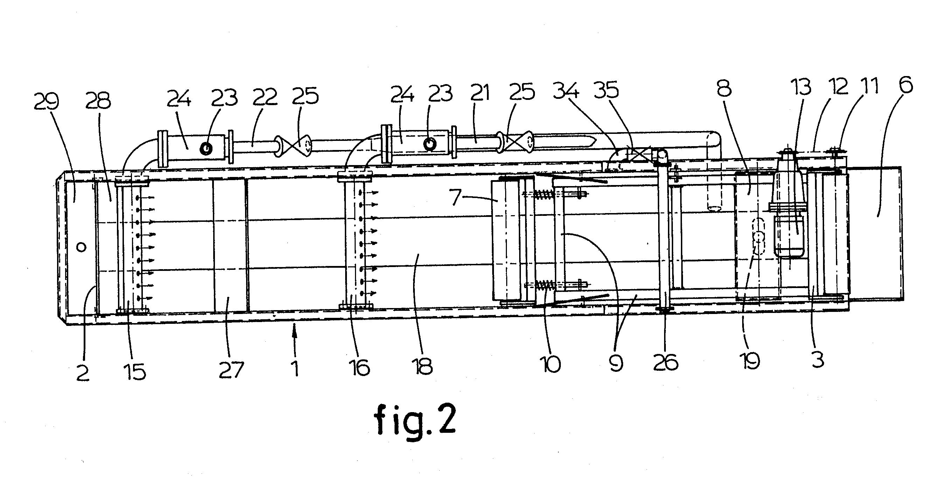

For this purpose the nozzle pipes 15, 16 are connected to a recirculation pump 17 which, as shown in fig. 1, is mounted underneath the gutter shaped bottom 18 of the water container 1, which bottom 18 slightly declines towards the vegetable discharge end 2. The recirculation pump 17 sucks water through a suction filter 20 and a suction conduit 19 from the water container 1 near the vegetable discharge end 3 thereof. The pressure side of the recirculation pump 17 is connected to the nozzle pipes 15, 16 through the delivery conduits 21 and 22 which, as shown in fig. 2, extend alongside the water container 1.

In each delivery conduit 21, 22 an ejector 24 provided with an air inlet pipe 23 is mounted. The upper end of each air inlet pipe 23 lies above the water level of the water container 1. Further, a control valve 25 is mounted in each delivery conduit 21, 22 for controlling the supply of water to the nozzle pipes 15, 16 and thus the capacity of these nozzle pipes 15, 16 independent from each other.

While filtered water from the water container 1 is recirculated through the nozzle pipes 15, 16 a supply of fresh water is supplied through a further nozzle pipe 26, which is connected to a supply of fresh water and which is positioned at a smaller distance from the vegetable discharge end 3 of the water container 1  than the nozzle pipes 15, 16. This nozzle pipe 26 is positioned above the discharge conveyor belt 5 and debouches above the water level of the water container 1.

At some distance beyond the nozzle pipe 15 a partition 27 declines towards the vegetable supply side 2. This partition 27 extends in the transverse direction over the whole width of the water container 1 and protrudes underneath the water level. The position of this partition 27 is adjustable. A fixed inlet partition 28 is mounted near the vegetable supply end 2 of the water container 1.

The nozzle pipes 15, 16 are provided with radial orifices which are equally divided over the length of the nozzle pipes 15, 16 and which are upwardly inclined and directed towards the vegetable discharge end 3 of the water container 1, so that the vegetables in the water container 1 obtain the component of movement in the direction of the discharge means 4 as already described hereinbefore. The nozzle pipes 15, 16 are rotatable about an axis which extends transversely with respect to the water container 1, in order to be able to somewhat adjust this component of movement.

At the vegetable supply end 2 an overflow 29 is mounted outside the water container 1 and is in open communication with the interior of the water container 1 through a perforated wall portion 30 of the water container 1.

As shown in the drawings the overflow 29 is adjustable in the vertical direction, so that the height of the water level in the water container 1 may be somewhat adjusted. Due to the positioning of this overflow 29 at the vegetable supply end 2 it is attained that the vegetables to be washed and the water substantially move in counterflow.

A removable fine filter 31 is positioned underneath the discharge belt 5 in the water container 1, while the suction filter 20 lies underneath this fine filter 31 and is constructed as a coarse filter.

Further a cleansing hole is formed at the vegetable discharge end 3 of the water container 1. This cleansing hole may be closed by means of a screw cap 32. Through this cleansing hole water may be sprayed by means of a water hose into the water container 1, in order to clean the same including its corners.

A mud door 33 for discharging the deposited dirt has been mounted on the vegetable supply end 2 of the water container 1 near the bottom 18 thereof, which mud door 33 may be displaced between an open and a closed position.

All parts of the apparatus for washing vegetables which come into contact with the vegetables or with the wash water are made from rustless steel, artificial material or aluminium.

For filling the water container 1 a branch conduit 34, which is provided with a valve 35, is connected to the fresh water supply and debouches into the water container 1.

When supplying vegetables to be washed to the supply end 2 of the water container 1, which supply preferably takes place by means of a continuously operating supply means (not shown), the vegetables are deposited via the partition 28 in the water of the water container 1 near the nozzle pipe 15, at which place the first washing section begins.

The several rows of orifices of this nozzle pipe 15 deliver a mixture of water and air which preferably has a ratio of mixture of approximately 1 : 5. This water-air mixture is formed in the ejector 24, which comprises a venturi which is passed by the recirculation water, while the air inlet pipe 23 approximately debouches in the throat of this venturi.

The supplied vegetables are brought into turbulence in the first washing section of the water container 1 and are gradually moved forward.

In this first washing section the coarser and heavier dirt is quickly removed, whilst by the supply of relatively much air more than one purpose is attained. In the first place the turbulence is increased, while furthermore the particles of the vegetables will float upwardly due to the adhering air bubbles, so that the washing process substantially takes place in the upper portion of the water container 1. At the same time the heavier dirt gets the possibility to sink downwardly towards the lower portion of the water container 1, wherein no air is present in the water.

The vegetables which are moved forwardly in the upper portion of the water container 1 by means of the water flow subsequently arrive at the second washing section which begins at the nozzle pipe 16 and wherein the washing operation takes place in a similar manner as in the first washing section by means of the water-air mixture which is supplied from this nozzle pipe 16. In this second washing section the advantages connected to the supply of a water-air mixture, which are already described hereinbefore, are attained again.

The vegetables are continuously moved forward and also pass the second washing section whereupon these vegetables reach the lower or receiving end of the perforated discharge conveyor belt 5, at which location the third washing section, which is also the last washing section, begins.

The discharge conveyor belt 5 lifts the vegetables from the water and allows these vegetables to drain out. The vegetables which are draining out pass this third washing section, wherein the nozzle pipe 26 carries out an effective rinsing with fresh water.

Hereafter the vegetables may still further drain out on the discharge conveyor belt 5 in the third washing section before the vegetables are discharged through the outlet case 6. Particles of the vegetables which may adhere to the discharge conveyor belt 5 are removed by means of the brush 14.

In the apparatus for washing vegetables as described hereinbefore the vegetables are washed in three successive washing sections, wherein the wash water is progressively cleaner. The dirtiest water is discharged after this water has washed the vegetables which have just been supplied to the water container 1.

In the first and the second washing section the supply of the water-air mixture through the nozzle pipes 15, 16 leads to a very intensive washing operation due to the fact that the water is forcibly moved forward with respect to the vegetables in the upper portion of the water container 1. Contrary thereto the water movement in the lower portion of the water container 1 is rather slight in these two washing sections, so that the dirt obtains the possibility to move downwardly.

The discharge means 4 as a whole, thus including the discharge conveyor belt 5, the rollers 7 and 8 and the frame 9 may be swivelled upwardly about the shaft of the roller 8 from its operative position as shown in fig. 1, wherein the frame 9 rests on a movable support (not shown). Hereupon the discharge means 4 may rest on a support pin (not shown), which is temporarily mounted for this purpose, whereafter the inner side of the discharge conveyor belt 5 may be cleaned above the water level by means of a water spray, whilst this discharge conveyor belt 5 is running. In the upwardly swivelled position of the discharge means 4 the filter 31 is easily accessible for cleaning purposes, whilst after removal of this filter 31 the suction filter 20 may be thoroughly cleaned as well.

0117589

The apparatus according to the invention has the great advantage that only a very small quantity of water is necessary, which is exclusively supplied through the nozzle pipe 26. Further, only a small percentage of the dirt is contained in the sewage water as most of the dirt is collected in the water container 1 and is discharged through the mud door 33 in concentrated form.

In addition to the above the apparatus for washing vegetables has a low energy consumption, while a compact simple construction is obtained.

The apparatus for washing vegetables is easy to operate, while the special advantage is obtained that no bruise of the vegetables can occur during the washing process due to the fact that the displacement of the vegetables through the water container 1 towards the discharge means 4 exclusively takes place by means of the water flow.

By means of the adjustment of the overflow 29, the control valves 25, the nozzle pipes 15, 16 and the partition 27 an adaptation may be obtained in dependency of the type of the vegetables and the quantity of dirt therein, whilst in connection with this quantity of dirt the washing time may also be varied within certain limits.

The invention is not restricted to the embodiment shown in the drawings by way of example, which may be varied in several ways within the scope of the appended claims.

- 9 -                    0117589

## Claims:

1. Apparatus for washing vegetables, in particular for washing cut vegetables such as endive, witloof, or leek, as well as for washing finer vegetables, such as spinach, comprising a water container, to which the vegetables to be washed are supplied at one end, while at the opposite end of the water container a discharge means is provided for discharging the washed vegetables, c h a r a c t e r i z e d  in that at least one nozzle pipe extends in the water container underneath the water level, which nozzle pipe is connected to a supply of a water-air mixture obtained by means of an ejector having an air-inlet pipe, said water-air mixture giving the supplied vegetables a component of movement in the water container in the direction of the discharge means.

2. Apparatus for washing vegetables according to claim 1, c h a r a c t e r i z e d  in that a first nozzle pipe operates in the vicinity of the vegetable supply end of the water container, while a second nozzle pipe operates between the first nozzle pipe and the discharge means, both nozzle pipes extending in the transverse direction of the water container over at least approximately the entire width thereof.

3. Apparatus for washing vegetables according to claim 1 or 2, c h a r a c t e r i z e d  in that the said nozzle pipe(s) is (are) connected to the recirculation pump, which may suck water through a suction filter near the vegetable discharge end of the water container, the delivery side of this pump being connected to the (each) nozzle pipe through a delivery pipe, in which the ejector is mounted, while at least one further nozzle pipe which is connected to a supply of fresh water, lies closer to the vegetable discharge end than the first mentioned nozzle pipe(s).

4. Apparatus for washing vegetables according to claim 3, c h a r a c t e r i z e d  in that the further nozzle pipe which is connected to the fresh water supply extends over the discharge means and debouches above the water level of the water container.

5. Apparatus for washing vegetables according to any one of claims 2 - 4, c h a r a c t e r i z e d  in that a transverse partition extends between the first and the second nozzle pipe, which partition protrudes an adjustable distance underneath the water level and declines towards the vegetable supply end.

6. Apparatus for washing vegetables according to claim 3, 4 or 5, c h a r a c t e r i z e d  in that a control valve is mounted in the (each) delivery pipe.

7. Apparatus for washing vegetables according to any one of the preceding claims, c h a r a c t e r i z e d  in that the first mentioned nozzle pipe(s) is (are) provided with orifices, which are upwardly inclined and directed towards the vegetable discharge end of the water container.

8. Apparatus for washing vegetables according to any one of the preceding claims, c h a r a c t e r i z e d  in that the first mentioned nozzle pipe(s) is (are) rotatable about an axis which extends transversely with respect to the water container.

9. Apparatus for washing vegetables according to any one of the preceding claims, c h a r a c t e r i z e d  in that an overflow which is adjustable in the vertical direction is mounted near the vegetable supply end of the water container.

10. Apparatus for washing vegetables according to claim 9, c h a r a c t e r i z e d  in that the overflow is mounted outside the water container and is in open communication with the interior of the water container through a perforated wall portion of the water container.

11. Apparatus for washing vegetables according to any one of the preceding claims, c h a r a c t e r i z e d  in that the water-air mixture, which is supplied to the first-mentioned nozzle pipe(s) has a ratio of mixture of at least approximately 1 : 5.

12. Apparatus for washing vegetables according to any one of claims 3 - 11, c h a r a c t e r i z e d  in that the (each) ejector comprises a venturi, which is passed by the recirculation water, while the air-inlet pipe debouches at least approximately into the throat of this venturi.

- 11 -

0117589

13. Apparatus for washing vegetables according to any one of the preceding claims, c h a r a c t e r i z e d in that the discharge means comprises a driven perforated endless discharge conveyor belt, of which one end is positioned underneath and the other end is positioned above the water level of the water container.

14. Apparatus for washing vegetables according to claim 13, c h a r a c t e r i z e d in that a cleaning brush acts upon the lower portion of the discharge conveyor belt.

15. Apparatus for washing vegetables according to any one of claims 3 - 14, c h a r a c t e r i z e d in that a removable fine filter is positioned underneath the discharge means in the water container, while the suction filter is positioned underneath this fine filter and is constructed as a coarse filter.

16. Apparatus for washing vegetables according to any one of the preceding claims, c h a r a c t e r i z e d in that the discharge means may be swivelled upwardly from its lowermost working position.

17. Apparatus for washing vegetables according to claim 16, c h a r a c t e r i z e d in that the discharge means may be swivelled upwardly about the shaft of an upper roller over which the endless discharge conveyor belt is led.

18. Apparatus for washing vegetables according to claim 16 or 17, c h a r a c t e r i z e d in that the discharge means may be supported in the upward position by means of a pin or the like, which may be removably mounted for this purpose.

19. Apparatus for washing vegetables according to any one of the preceding claims, c h a r a c t e r i z e d in that a cleansing hole is formed at the vegetable discharge end of the water container, which hole may be closed by means of a screw cap.

20. Apparatus for washing vegetables according to any one of the preceding claims, c h a r a c t e r i z e d in that a mud door for discharging the deposited dirt is mounted on the vegetable supply end of the water container near the bottom thereof, which mud door may be displaced between an open and a closed position.

21. Apparatus for washing vegetables according to any one of claims 13 - 20, c h a r a c t e r i z e d in that the end of the discharge conveyor belt which is positioned above the water level debouches into an outlet case for washed vegetables.

22. Method for operating an apparatus for washing vegetables according to any one of the preceding claims, c h a r a c t e r i z e d in that the vegetables are washed in counterflow by means of a plurality of successive washing operations.

23. Method according to claim 22, c h a r a c t e r i z e d in that the washing operations are carried out in three successive washing sections.

fig.1

fig.2

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-C- 706 077 (H. DECKER) * Page 1, lines 1-6; page 2, lines 28-57; figures 1-3 * | 1,22 | A 23 N 12/02 |
| A | FR-A-1 564 529 (E. ARRIAGA LOPEZ DE VERGARA) | | |
| A | FR-A-1 075 273 (R.-E.-A. PARISOT) | | |
| A | FR-A-2 507 868 (A. MINAIRE) | | |
| A | US-A-2 808 612 (H.F. SNOW) | | |

TECHNICAL FIELDS SEARCHED (Int. Cl. ³)

A 23 N
A 22 C

The present search report has been drawn up for all claims

| Place of search | Date of completion of the search | Examiner |
|---|---|---|
| THE HAGUE | 03-05-1984 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82